# EUROPEAN PATENT SPECIFICATION

(11) **EP 3 492 829 B1**
(45) Date of publication and mention of the grant of the patent: **15.04.2020**
(21) Application number: 16910523.6
(22) Date of filing: 27.07.2016
(51) Int. Cl.: F24F 11/30, B60H 1/00, B61D 27/00, B60H 3/00, B60H 3/02, B60H 1/14, B60H 1/32

(54) **AIR-CONDITIONING APPARATUS, AIR-CONDITIONING METHOD, AND CONTROL PROGRAM**
KLIMATISIERUNGSVORRICHTUNG, KLIMATISIERUNGSVERFAHREN UND STEUERUNGSPROGRAMM
APPAREIL DE CLIMATISATION, PROCÉDÉ DE CLIMATISATION ET PROGRAMME DE COMMANDE

(43) Date of publication of application: 05.06.2019
(73) Proprietor: Mitsubishi Electric Corporation, Chiyoda-ku Tokyo 100-8310 (JP)
(72) Inventor: URAKAWA Masatoshi, Tokyo 100-8310 (JP); YUASA Hiroyuki, Tokyo 100-8310 (JP)
(74) Representative: Studio Torta S.p.A.
(86) International application number: PCT/JP2016/072079
(87) International publication number: WO 2018/020620

(56) References cited:
- JP-A- H08 132 856
- JP-A- H08 132 864
- JP-A- 2000 280 898
- JP-A- 2001 065 958
- JP-A- 2010 184 579
- JP-U- S5 616 575
- US-A1- 2015 323 227
- US-B2- 6 843 312

## Description

### Technical Field

The present disclosure relates to a vehicle having an air-conditioning apparatus.

### Background Art

An air-conditioning apparatus for air-conditioning an interior forms a refrigeration cycle by use of an evaporator absorbing heat from air and a condenser releasing heat to the air. The interior can be cooled when the evaporator is used as an indoor heat exchanger performing heat exchange with the air of the interior, and the interior can be heated when the evaporator is used as an outdoor heat exchanger for performing heat exchange with the air of the exterior. Examples of an air-conditioning apparatus of the above-mentioned type are disclosed in JP-A-H08132864, JP-AH08132856 and US-B-6843312.

In the case of cooling the interior, dew condensation occurs on the evaporator used as the indoor heat exchanger. The moisture attached to the indoor heat exchanger due to such dew condensation causes mildew and abnormal odor. Thus technology is known by which after cooling, the circulation direction of the refrigerant in the refrigeration cycle is reversed, and the indoor heat exchanger is made to function as a condenser to generate heat and dry the indoor heat exchanger (see Patent Literature 1).

However, when the interior is heated, frost can form on the evaporator that is used as the outdoor heat exchanger. The frost attached to the outdoor heat exchanger causes a lowering of a heat exchange efficiency of the outdoor heat exchanger. Thus technology is known by which the circulation direction of the refrigerant in the refrigeration cycle is reversed, and the outdoor heat exchanger is made to function as the condenser to generate heat and remove the frost (see Patent Literature 2).

### Citation List

### Patent Literature

Patent Literature 1: Unexamined Japanese Patent Application Kokai Publication No. H04-270844
Patent Literature 2: Unexamined Japanese Patent Application Kokai Publication No. 2013-217506

### Summary of Invention

### Technical Problem

In the technologies of Patent Literature 1 and 2, operation of the refrigeration cycle is used to cause the generation of heat for removal of the moisture or frost attached to the evaporator. Thus a large amount of power is consumed for the removal of the moisture or frost.

An objective of the present disclosure is to provide a vehicle having an air-conditioning apparatus such that the moisture or frost attached to the evaporator can be removed, and such that the power required for such removal is less than the conventionally required power.

In order to attain the aforementioned objective, a vehicle having an air-conditioning apparatus is disclosed as claimed in the appended set of claims.

### Advantageous Effects of Invention

Due to providing of the aforementioned configuration per the air-conditioning apparatus according to the present disclosure, moisture or frost attached to the evaporator during air conditioning is removed by waste heat released from the heat-release part to the evaporator. Due to the use of the waste heat for the removal of the moisture or frost, the power required for removal of the moisture or frost is suppressed down to a lower value than the value of the conventionally required power.

### Brief Description of Drawings

FIG. 1 is a block diagram of a railway vehicle air-conditioning apparatus according to Embodiment 1;
FIG. 2 is a conceptual drawing of a waste heat recovery part of a waste heat recovery unit according to Embodiment 1;
FIG. 3 is a plan view of the railway vehicle air-conditioning apparatus according to Embodiment 1;
FIG. 4 is a partial cross-sectional view illustrating structure of a periphery of a heat-release part of the waste heat recovery unit and an indoor heat exchanger according to Embodiment 1;
FIG. 5 is a flowchart of cooling-drying control according to Embodiment 1;
FIG. 6 is a flowchart of heating control according to Embodiment 1;
FIG. 7 is a conceptual drawing of a waste heat recovery part of a waste heat recovery unit according to Embodiment 2;
FIG. 8 is a conceptual drawing of a waste heat recovery part of a waste heat recovery unit according to Embodiment 3;
FIG. 9 is a partial cross-sectional view illustrating structure of a periphery of a heat-release part of a waste heat recovery unit and an indoor heat exchanger according to Embodiment 4, only shown for illustrative purposes;
FIG. 10 is a flowchart of dehumidifying control according to Embodiment 4, only shown for illustrative purposes;
FIG. 11 is a block diagram of a railway vehicle air-conditioning apparatus according to Embodiment 5; and
FIG. 12 is a flowchart of defrosting control according to Embodiment 5.

### Description of Embodiments

Embodiments of the present invention are described below with reference to the drawings while citing an example of an air-conditioning apparatus used in a railway vehicle. In the drawings, components that are the same or equivalent are assigned the same reference sign.

### Embodiment 1

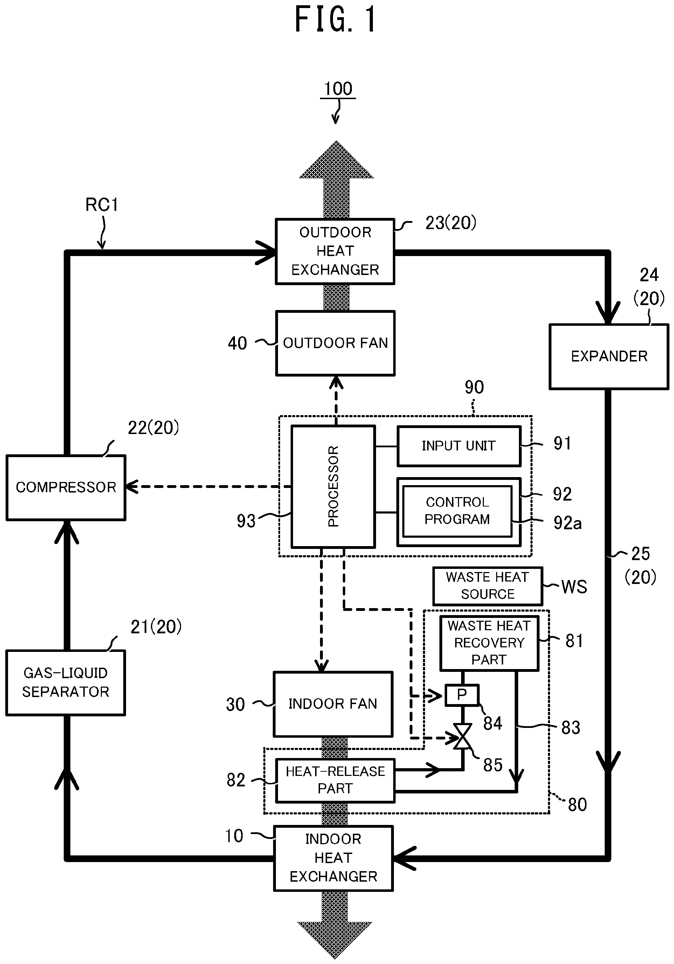

As illustrated in FIG. 1, a railway vehicle air-conditioning apparatus 100 according to the present embodiment includes an indoor heat exchanger 10 that performs heat exchange with air inside a passenger compartment of a railway vehicle, a cooperative device group 20 that forms, together with the indoor heat exchanger 10, a first refrigeration cycle RC1 using a refrigerant by exchange of the refrigerant with the indoor heat exchanger 10.

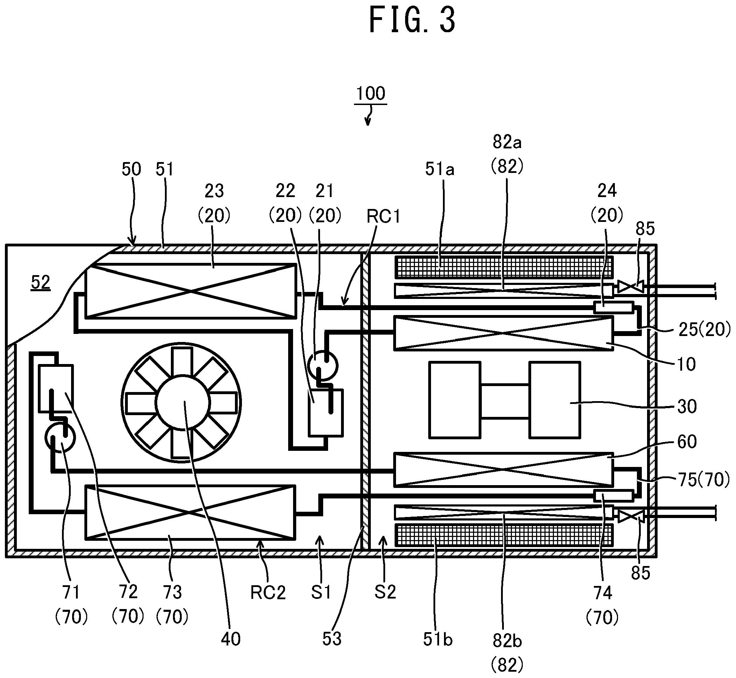

Further, the railway vehicle air-conditioning apparatus 100, separately from the first refrigeration cycle RC1, has a second refrigeration cycle RC2 illustrated in FIG. 3. The configuration and operation of the second refrigeration cycle RC2 are similar to the configuration and operation of the first refrigeration cycle RC1. Thus to facilitate understanding, the first refrigeration cycle RC1 is described below as a representative refrigeration cycle with reference to FIG. 1.

The first refrigeration cycle RC1 cools the passenger compartment of the railway vehicle. That is, the indoor heat exchanger 10, in addition to cooling indoor air by absorbing heat from air within the passenger compartment of the railway vehicle (referred to below as "indoor air"), functions as an evaporator for evaporating a refrigerant by heat absorbed from the indoor air.

The cooperative device group 20 includes: a gas-liquid separator 21 for separating liquid from the refrigerant having passed through the indoor heat exchanger 10 and allowing passage only of evaporated refrigerant, a compressor 22 for compressing the refrigerant having passed through the gas-liquid separator 21, an outdoor heat exchanger 23 functioning as a condenser that condenses the compressed refrigerant, and an expander 24 for allowing expansion of the condensed refrigerant and returning the expanded refrigerant to the indoor heat exchanger 10.

The outdoor heat exchanger 23 allows condensation of the refrigerant by performing heat exchange with the air of the exterior of the passenger compartment of the railway vehicle (referred to below as outdoor air). Specifically, the outdoor heat exchanger 23 causes condensation of the refrigerant by releasing heat to the outdoor air. Further, the cooperative device group 20 also has a refrigerant line 25, for guiding therein the refrigerant, connecting together the gas-liquid separator 21, the compressor 22, the outdoor heat exchanger 23, the expander 24, and the indoor heat exchanger 10.

The railway vehicle air-conditioning apparatus 100 also includes: an indoor fan 30 serving as an evaporator fan that promotes heat exchange by the indoor heat exchanger 10, and an outdoor fan 40 serving as a condenser fan that promotes heat exchange by the outdoor heat exchanger 23. The indoor fan 30 creates a flow of indoor air that strikes the indoor heat exchanger 10, and the outdoor fan 40 creates a flow of outdoor air that strikes the outdoor heat exchanger 23.

During operation of the first refrigeration cycle RC1, the flow of indoor air created by the indoor fan 30 strikes the indoor heat exchanger 10, and the indoor air is cooled by the indoor heat exchanger 10. At this time, dew condensation occurs on the indoor heat exchanger 10. The moisture generated by this dew condensation causes mildew and abnormal odor.

Thus the railway vehicle air-conditioning apparatus 100, in order to dry off the moisture generated by the dew condensation during cooling, is also equipped with a waste heat recovery unit 80 for heating the indoor heat exchanger 10 by using waste heat after the cooling. The waste heat recovery unit 80 has a heat recovery part 81 for recovery of waste heat from a waste heat source WS.

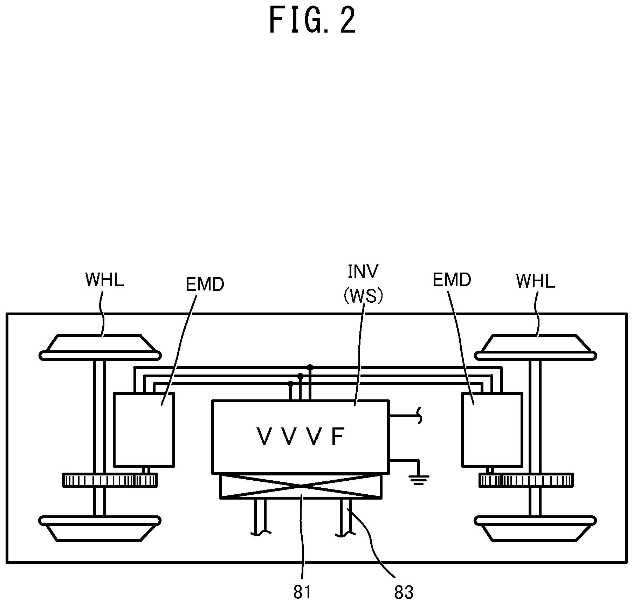

As indicated in FIG. 2, the waste heat source WS is specifically a variable voltage variable frequency-type (VVVF-type) inverter INV serving as a first power supply circuit for supplying power to an electric motor EMD for propelling the railway vehicle. The inverter INV is supplied power from a power line, and outputs variable voltage variable frequency power to the electric motor EMD. The electric motor EMD drives a wheel WHL by the power supplied by the inverter INV.

The waste heat recovery part 81 is thermally coupled to the inverter INV. Specifically, the waste heat recovery part 81 is in surface contact with a body included in the inverter INV. The waste heat recovery part 81 is formed from metallic components, through the interior of which can flow brine serving as a heat transmission fluid. The brine is circulated through a below described liquid line 83. Further, the waste heat recovery part 81 and the inverter INV are disposed below the floor of the railway vehicle. However, the location of the waste heat recovery part 81 is not particularly limited to a position below the floor of the railway vehicle. In accordance with the position of disposal of the component used as the waste heat source WS, the waste heat recovery part 81 can be disposed on the roof of the railway vehicle.

Again with reference to FIG. 1, in addition to the waste heat recovery part 81, the waste heat recovery unit 80 has: a heat-release part 82 formed by metallic components, through the interior of which brine can flow; a liquid line 83 that interconnects the waste heat recovery part 81 and the heat-release part 82 and forms, together with the waste heat recovery part 81 and the heat-release part 82, a closed circulation route for circulating brine; a pump 84 for circulating brine in the circulation route; and a solenoid valve 85 that controls circulation of brine.

The heat-release part 82 is disposed upstream of the indoor heat exchanger 10 in the route of flow of the indoor air created by the indoor fan 30. The heat-release part 82 has a radiation fan that promotes release, to the indoor heat exchanger 10, of waste heat transmitted to the heat-release part 82.

When the pump 84 operates and the solenoid valve 85 is open, the waste heat recovery unit 80 is in a "heat-releasing state" in which waste heat from the waste heat recovery part 81 is transmitted via the brine to the heat-release part 82 and released by the heat-release part 82. However, when the pump 84 is stopped or the solenoid valve 85 is closed, the flow of brine stops, and thus the waste heat recovery unit 80 is in a "heat-release-stopped state" in which waste heat from the waste heat recovery part 81 is less transmittable to the heat-release part 82 than when in the heat-releasing state.

When the first refrigeration cycle RC1 is stopped, and the indoor fan 30 is creating the flow of indoor air, the waste heat recovery unit 80 is controlled to be in the heat-releasing state by the controller 90. Thus the indoor air heated by the heat-release part 82 strikes the indoor heat exchanger 10 and removes the moisture attached to the indoor heat exchanger 10.

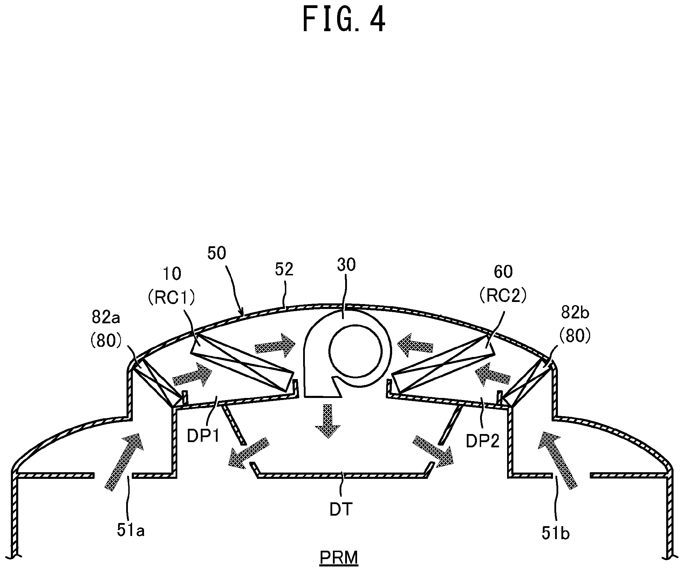

Specific arrangements of the heat-release part 82, the indoor heat exchanger 10, the cooperative device group 20, the indoor fan 30, and the outdoor fan 40 are described below with reference to FIGS. 3 and 4.

As illustrated in FIG. 3, the heat-release part 82, the indoor heat exchanger 10, the cooperative device group 20, the indoor fan 30, and the outdoor fan 40 are contained in a casing 50 forming a portion of the roof of the railway vehicle. Although an example is illustrated here in which the casing 50 forms a portion of the roof of the railway vehicle, the casing 50 can be arranged at positions such as below the floor or in the floor of the railway vehicle.

Further, the interior of the casing 50 accommodates an indoor heat exchanger 60 and a cooperative device group 70 that form a second refrigeration cycle RC2 that is separate from the first refrigeration cycle RC1. To facilitate understanding, the second refrigeration cycle RC2 is omitted from the aforementioned FIG. 1.

The cooperative device group 70 is formed by a gas-liquid separator 71, a compressor 72, an outdoor heat exchanger 73, an expander 74, and a refrigerant line 75. Similarly to the first refrigeration cycle RC1, the second refrigeration cycle RC2 cools the passenger compartment of the railway vehicle. Further, the indoor fan 30 and the outdoor fan 40 are used by both the first refrigeration cycle RC1 and the second refrigeration cycle RC2.

The casing 50 has a box-shaped base frame 51 that is open at a top portion thereof, and a top plate 52 that covers the top opening of the base frame 51. In order to illustrate the interior of the casing 50 in FIG. 3, only a portion of the top plate 52 is illustrated. The casing 50 has a partition plate 53 partitioning, into an outdoor unit chamber S1 and an indoor unit chamber S2, an interior space defined by the base frame 51 and the top plate 52.

The outdoor unit chamber S1 communicates with the exterior of the casing 50. The gas-liquid separators 21 and 71, the compressors 22 and 72, the outdoor heat exchangers 23 and 73, and the outdoor fan 40 are disposed in the outdoor unit chamber S1. The outdoor fan 40 is disposed between the outdoor heat exchangers 23 and 73. The outdoor fan 40 takes in outdoor air from the exterior of the casing 50 through a non-illustrated air intake port arranged in the casing 50, passes the in-taken outdoor air through the outdoor heat exchangers 23 and 73, then passes the air though a non-illustrated air discharge port arranged in the casing 50, and discharges the air to the exterior of the casing 50.

However, the indoor heat exchangers 10 and 60, the expanders 24 and 74, the indoor fan 30, and the heat-release part 82 are disposed in the indoor unit chamber S2. Further, the refrigerant lines 25 and 75 are arranged in both the outdoor unit chamber S1 and the indoor unit chamber S2 by passing through the partition plate 53.

The indoor unit chamber S2 communicates with the passenger compartment of the railway vehicle. Specifically, return ports 51a and 51b that communicate with the passenger compartment of the railway vehicle are opened in a bottom surface of the indoor unit chamber S2. The return ports 51a and 51b are disposed separated from each other in the widthwise direction of the railway vehicle. The indoor fan 30 is positioned between the return ports 51a and 51b. Although FIG. 3 illustrates an example in which the return ports 51a and 51b are formed in the bottom surface of the indoor unit chamber S2, the return ports 51a and 51b may be formed in a laterally-disposed side surface or a longitudinally-disposed side surface of the indoor unit chamber S2.

The heat-release part 82 is formed by a first heat-release part 82a and a second heat-release part 82b. The first heat-release part 82a is disposed between the indoor fan 30 and one return port, the return port 51a. The second heat-release part 82b is disposed between the indoor fan 30 and the other return port, the return port 51b. The first heat-release part 82a and the second heat-release part 82b are connected to the waste heat recovery part 81 below the floor, as illustrated in FIG. 2, via the liquid line 83 illustrated in FIG. 1.

Further, the first heat-release part 82a and the second heat-release part 82b are connected together in parallel via the liquid line 83 illustrated in FIG. 1. This configuration enables balancing of the amount of waste heat of the first heat-release part 82a and the second heat-release part 82b. However, the first heat-release part 82a and the second heat-release part 82b may be connected in series.

Also, the indoor heat exchanger 10 is disposed between the first heat-release part 82a and the indoor fan 30, and the indoor heat exchanger 60 is disposed between the second heat-release part 82b and the indoor fan 30.

As illustrated in FIG. 4, a drain pan DP1 for receiving moisture generated by dew condensation on the indoor heat exchanger 10 is formed below the indoor heat exchanger 10. A drain pan DP2 for receiving moisture generated by dew condensation on the indoor heat exchanger 60 is formed below the indoor heat exchanger 60. Further, a duct DT is interposed between the indoor fan 30 and a passenger compartment PRM of the railway vehicle.

The indoor fan 30, together with sucking up indoor air from the passenger compartment PRM via the return port 51a, passes the sucked-up indoor air, in order, through the first heat-release part 82a and the indoor heat exchanger 10, and then returns the sucked-up indoor air to the passenger compartment PRM via the duct DT. The duct DT guides the indoor air discharged by the indoor fan 30 to the passenger compartment PRM.

In the same manner, the indoor fan 30, together with sucking up indoor air via the return port 51b, passes the sucked-up indoor air, in order, through the second heat-release part 82b and the indoor heat exchanger 60, and then returns the sucked-up indoor air to the passenger compartment PRM via the duct DT.

During cooling operation, in a state in which the first heat-release part 82a and the second heat-release part 82b are not made to release heat, the first refrigeration cycle RC1 and the second refrigeration cycle RC2 are operated, and the indoor heat exchangers 10 and 60 are cooled. Such operation enables cooling of the passenger compartment PRM. After completion of the cooling operation, the indoor heat exchangers 10 and 60 can be dried by causing the first heat-release part 82a and the second heat-release part 82b to release heat while the indoor fan 30 is allowed to continue operating.

During heating operation, in a state in which the first refrigeration cycle RC1 and the second refrigeration cycle RC2 are not operated, the first heat-release part 82a and the second heat-release part 82b are made to release heat in a state in which the indoor fan 30 is made to operate. Such operation enables heating of the passenger compartment PRM.

The controller 90 illustrated in FIG. 1 controls the waste heat recovery unit 80, the indoor fan 30, the first refrigeration cycle RC1, and the second refrigeration cycle RC2 in order to achieve the cooling, the drying of the indoor heat exchangers 10 and 60, and the heating.

As illustrated in FIG. 1, the controller 90 has an input unit 91 for operation by a user, a storage 92 for storing a control program 92a, and a processor 93 that, by execution of the control program 92a, controls the first refrigeration cycle RC1, the second refrigeration cycle RC2 illustrated in FIG. 3, and at least one of the indoor fan 30, the outdoor fan 40, the pump 84, or the solenoid valve 85.

The input unit 91, in accordance with operation by the user, outputs to the processor 93 any one of a cooling-ON signal to start the cooling operation, a heating-ON signal to start the heating operation, or an out-of-service starting signal to start the railway vehicle to pass through without stopping. In accordance with the signal received from the input unit 91, the processor 93 performs cooling-drying control to cool the passenger compartment and thereafter to dry the indoor heat exchangers 10 and 60, and heating control to heat the passenger compartment.

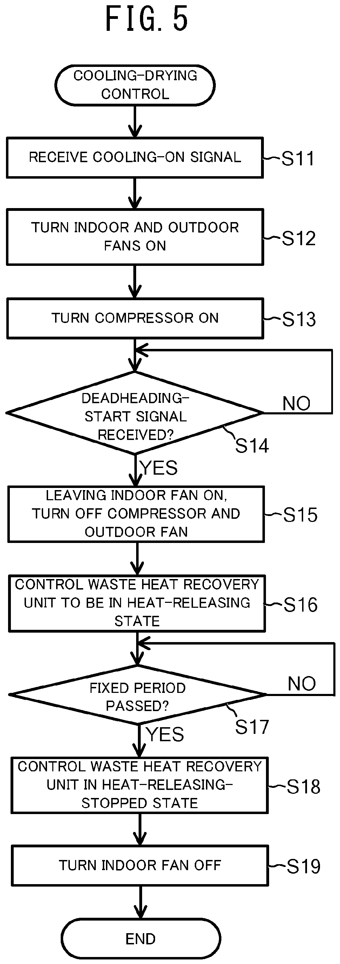

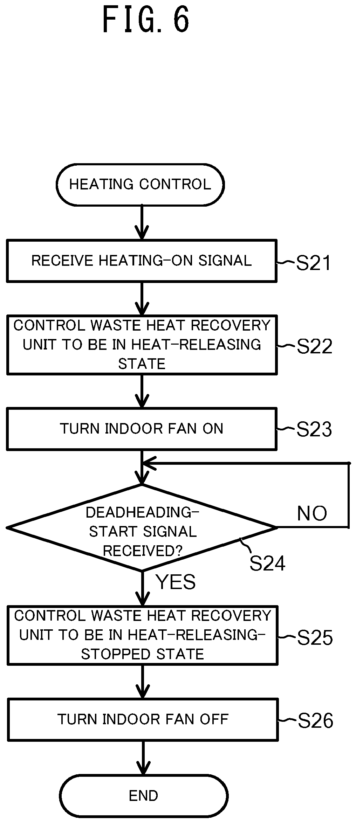

The control program 92a allows the processor 93 to achieve a function for performing cooling-drying control and a function for performing heating control. Specific operation achieved by the processor 93 via the control program 92a is described with reference to FIGS. 5 and 6.

The cooling-drying control is firstly described with reference to FIG. 5. Upon reception of the cooling-ON signal from the input unit 91 (step S11), the processor 93 causes operation of the indoor fan 30 and the outdoor fan 40 (step S12), and next causes operation of the compressors 22 and 72 (step S13).

Due to operation of the compressor 22, the refrigerant starts to be exchanged between the indoor heat exchanger 10 and the cooperative device group 20 in the first refrigeration cycle RC1 illustrated in FIG. 3. In a similar manner, due to operation of the compressor 72, the refrigerant starts to be exchanged between the indoor heat exchanger 60 and the cooperative device group 70 in the second refrigeration cycle RC2.

Then the indoor heat exchangers 10 and 60 are in a cooled state without emission of heat by the first heat-release part 82a and the second heat-release part 82b illustrated in FIG. 4. Thus the indoor air is cooled by the indoor heat exchangers 10 and 60, and the passenger compartment PRM is cooled.

When indoor air is cooled by the indoor heat exchangers 10 and 60, dew condensation occurs on the indoor heat exchangers 10 and 60. Although the moisture generated by such dew condensation is discharged to the exterior via the drain pans DP1 and DP2, such moisture cannot be entirely discharged, and moisture remains on the surfaces of the indoor heat exchanger 60 and on the drain pans DP1 and DP2.

Again with reference to FIG. 5, upon reception of the out-of-service starting signal from the input unit 91 (YES in step S14), the processor 93, while the indoor fan 30 continues to operate, causes stoppage of the running of the compressors 22 and 72 and the outdoor fan 40 (step S15).

The exchange of the refrigerant between the indoor heat exchanger 10 and the cooperative device group 20 in the first refrigeration cycle RC1 illustrated in FIG. 3 is stopped by stoppage of operation of the compressor 22. In a similar manner, the exchange of the refrigerant between the indoor heat exchanger 60 and the cooperative device group 70 in the second refrigeration cycle RC2 is stopped by stoppage of operation of the compressor 72. The cooling operation ends in this manner.

Further, conventionally cases occur in which the duct DT inner and outer surfaces are wetted from dew condensation due to the duct DT illustrated in FIG. 4 being in a state of lower temperature than the air in the interior immediately after ending of the cooling operation. Such wetting causes mildew and abnormal odor. In the present embodiment, the wetting of the inner and outer surfaces of the duct DT is suppressed in the below described manner.

Again with reference to FIG. 5, the processor 93 controls the waste heat recovery unit 80 to be in the heat-releasing state (step S16). Due to setting of the waste heat recovery unit 80 to the heat-releasing state, the first heat-release part 82a and the second heat-release part 82b illustrated in FIG. 4 are in a heat-releasing state. At this time, cooling of the indoor heat exchangers 10 and 60 is stopped, and the indoor fan 30 is operating.

Due to the indoor air heated by the first heat-release part 82a and the second heat-release part 82b striking the indoor heat exchangers 10 and 60, the moisture attached to the indoor heat exchangers 10 and 60 during cooling evaporates.

Further, due to disposal of the first heat-release part 82a upstream of the drain pan DP1 in the route of flow of indoor air created by the indoor fan 30, the moisture remaining on the drain pan DP1 during cooling evaporates. In a similar manner, due to disposal of the second heat-release part 82b upstream of the drain pan DP2 in the route of flow of indoor air created by the indoor fan 30, the moisture remaining on the drain pan DP2 during cooling evaporates.

Further, the indoor air heated by the first heat-release part 82a and the second heat-release part 82b is passed to the duct DT from the indoor fan 30, and thus wetting of the interior surface of the duct DT is suppressed. The cause of mildew and abnormal odor can be avoided in the aforementioned manner.

During drying of the indoor heat exchangers 10 and 60, the drain pans DP1 and DP2, and the duct DT, the heated indoor air is delivered to the passenger compartment PRM. However, upon the processor 93 receiving the aforementioned out-of-service starting signal, the railway vehicle starts passing through without stopping, and general passengers are not present in the passenger compartment PRM at this time. Thus a problem of passenger discomfort does not exist.

Again with reference to FIG. 5, upon continuation of drying of the indoor heat exchangers 10 and 60, the drain pans DP1 and DP2, and the duct DT in the above manner for a predetermined fixed period required for drying (YES in step S17), the processor 93 controls the waste heat recovery unit 80 to be in the heat-release-stopped state (step S18), stops operation of the indoor fan 30 (step S19), and ends the cooling-drying control.

Heating control is described next with reference to FIG. 6. Upon reception of the heating-ON signal from the input unit 91 (step S21), the processor 93 controls the waste heat recovery unit 80 to be in the heat-releasing state (step S22), and causes operation of the indoor fan 30 (step S23). Due to such operation, the indoor air is heated by the first heat-release part 82a and the second heat-release part 82b illustrated in FIG. 4. That is, the passenger compartment PRM is heated.

Next, upon reception of the out-of-service starting signal from the input unit 91 (YES in step S24), the processor 93 controls the waste heat recovery unit 80 to be in the heat-release-stopped state (step S25), causes stoppage of the operation of the indoor fan 30 (step S26), and ends the heating control.

The below results are obtained by the above described present embodiment.

The moisture attached to the indoor heat exchangers 10 and 60, the drain pans DP1 and DP2, and the duct DT during cooling is removed by release of heat from the first heat-release part 82a and the second heat-release part 82b. Thus the generation of mildew and abnormal odor can be suppressed.

Further, due to the use of waste heat as the heat released from the first heat-release part 82a and the second heat-release part 82b, the amount of power consumption required for removal of moisture and for heating of the passenger compartment PRM can be suppressed in comparison to conventional operation.

Waste heat can also be recovered from the compressors 22 and 72 and an auxiliary inverter for supplying power to the compressors 22 and 72. However, the release of heat from the compressors 22 and 72 and the auxiliary inverter gradually stops after stoppage of the compressors 22 and 72. Thus although the compressors 22 and 72 and the auxiliary inverter are not unusable as the waste heat source WS for drying the indoor heat exchangers 10 and 60, the drain pans DP1 and DP2, and the duct DT, the continued use of waste heat for a long period of drying is difficult.

In this respect, waste heat in the present embodiment is recovered from the inverter INV that is a constituent element of the main power circuit supplying power to the electric motor EMD. Release of heat from the inverter INV continues even after stoppage of the compressors 22 and 72. Thus even after stoppage of the compressors 22 and 72 and completion of the cooling operation, drying indoor heat exchangers 10 and 60, the drain pans DP1 and DP2, and the duct DT over a long period is possible due to waste heat at a sufficiently high temperature for causing evaporation of the residual moisture. Such configuration enables increased suppression of the occurrence of mildew and abnormal odor.

### Embodiment 2

Although the inverter INV is used as the waste heat source WS in the aforementioned Embodiment 1, the waste heat source WS is not limited to the inverter INV. An effect similar to that of the aforementioned Embodiment 1 can be obtained by using, as the waste heat source WS, components capable of releasing heat even after the stoppage of the compressors 22 and 72. A specific example is described below. Configuration and operation other than the waste heat source WS are the same as those in Embodiment 1, and thus description of such configuration and operation is omitted.

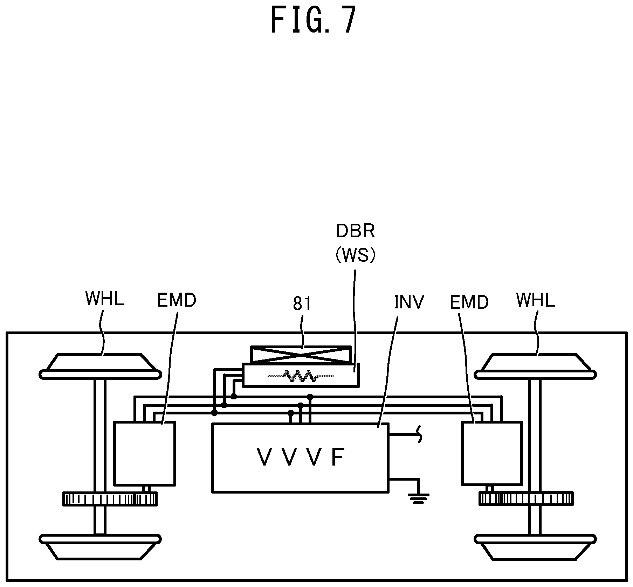

In the present embodiment as illustrated in FIG. 7, a dynamic braking resistor (DBR) is used as the waste heat source WS. The waste heat recovery part 81 is thermally coupled to the dynamic braking resistor DBR. Further, the liquid line 83 is omitted from FIG. 7 to facilitate understanding.

When the brake of the railway vehicle is applied, the dynamic braking resistor DBR together with the electric motor EMD form a closed circuit.

In this closed circuit, the electromotive force generated by the electric motor EMD is applied to the dynamic braking resistor DBR. By converting the electromotive force generated by the electric motor EMD into Joule heat, the dynamic braking resistor DBR causes a braking force to be applied to rotation of the electric motor EMD.

The dynamic braking resistor DBR can release heat even after stoppage of the compressors 22 and 72. Thus by using the dynamic braking resistor DBR as the waste heat source WS, even after completion of the cooling operation, the indoor heat exchangers 10 and 60, the drain pans DP1 and DP2, and the duct DT can be dried over a long period via the waste heat of the temperature sufficiently hot to cause evaporation of the residual moisture.

### Embodiment 3

Although waste heat is recovered from a single waste heat source WS in the aforementioned Embodiments 1 and 2, waste heat may be recovered from multiple waste heat sources WS. A specific example of such configuration is described below. In the same manner as in Embodiment 2, configuration and operation other than the waste heat source WS are the same as those in Embodiment 1, and thus description of such configuration and operation is omitted.

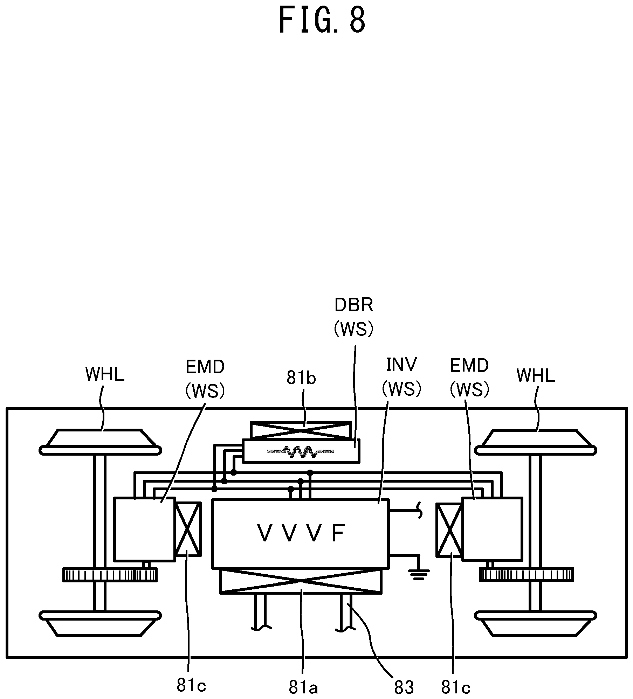

In the present embodiment as illustrated in FIG. 8, the waste heat recovery part 81 includes a first waste heat recovery part 81a that recovers waste heat from the inverter INV, a second waste heat recovery part 81b that recovers waste heat from the dynamic braking resistor DBR, and a third waste heat recovery part 81c that recovers waste heat from the electric motor EMD. Further, to facilitate understanding, only a portion of the liquid line 83 is illustrated in FIG. 8.

Due to the ability to recover waste heat from the three waste heat sources WS that are the inverter INV, the dynamic braking resistor DBR, and the electric motor EMD, the indoor heat exchangers 10 and 60, the drain pans DP1 and DP2, and the duct DT can be dried at a higher temperature in comparison to the aforementioned Embodiments 1 and 2. Although a case is illustrated here in which there are three waste heat sources WS, the number of waste heat sources WS may be two or at least four.

The electric circuits included in the railway vehicle include a main circuit and an auxiliary circuit. The main circuit includes the electric motor EMD and the inverter INV as a first power supply circuit that supplies power to the electric motor EMD. The auxiliary circuit includes a non-illustrated electric device (excluding the electric motor EMD) mounted on the railway vehicle and an auxiliary inverter as a non-illustrated second power supply circuit that supplies power to the electric device. Although the electric motor EMD and the inverter INV that form the main circuit are used as the waste heat sources WS in Embodiment 3, the auxiliary inverter included in the auxiliary circuit may be used as the waste heat source WS. Examples of the auxiliary inverter include a constant voltage constant frequency (CVCF) type statistic inverter (SIV). Examples of the electric device to which the auxiliary inverter supplies power include a head lamp, a tail lamp, an indoor light, a car interior information display, the compressors 22 and 72, and a brake controller.

### Embodiment 4

In the aforementioned Embodiment 1 as illustrated in FIG. 4, the first heat-release part 82a is disposed upstream of the indoor heat exchanger 10 in the route of flow of the indoor air, and the second heat-release part 82b is disposed upstream of the indoor heat exchanger 60. The position of the first heat-release part 82a is not particularly limited as long as release of heat to the indoor heat exchanger 10 is possible, and the position of the second heat-release part 82b is not particularly limited as long as release of heat to the indoor heat exchanger 60 is possible. Specific examples of modified positioning of the first heat-release part 82a and the second heat-release part 82b are described below. Other than the positioning of the first heat-release part 82a and the second heat-release part 82b, the configuration is the same as that of Embodiment 1 and operation also is basically the same as operation of Embodiment 1, and thus only differences are described below.

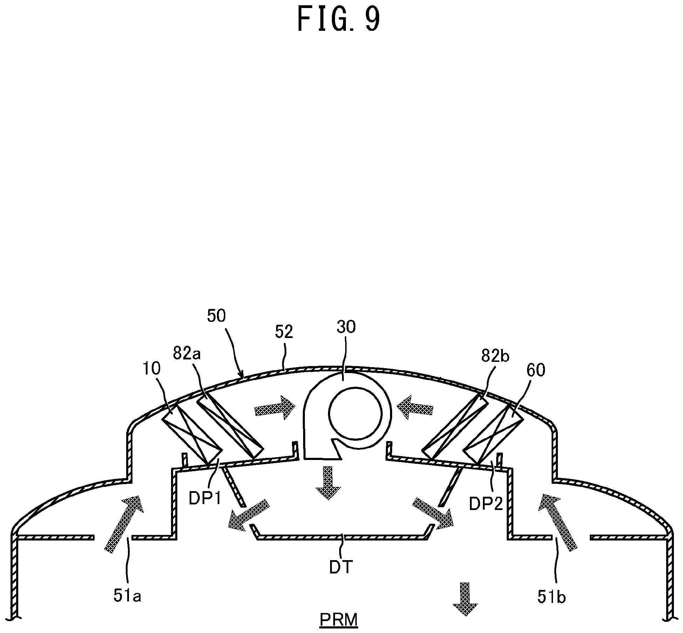

In the present embodiment as illustrated in FIG. 9, which does not form part of the invention but is only shown for illustrative purposes, the first heat-release part 82a is disposed downstream of the indoor heat exchanger 10 in the route of flow of the indoor air. The second heat-release part 82b is disposed downstream of the indoor heat exchanger 60 in the route of flow of the indoor air.

Drying of the indoor heat exchangers 10 and 60 after cooling in the present embodiment is performed in a state in which operation of the indoor fan 30 is stopped. Specifically, in step S15 of FIG. 5, the processor 93 stops operation of the indoor fan 30. Further, step S19 of FIG. 5 is omitted.

Due to controlling of the first heat-release part 82a and the second heat-release part 82b to be in the heat-releasing state even though operation of the indoor fan 30 is stopped, these parts radiate waste heat. That is, the indoor heat exchanger 10 and the drain pan DP1 are heated and dried by radiant heat of the first heat-release part 82a, and the indoor heat exchanger 60 and the drain pan DP2 are heated and dried by radiant heat of the second heat-release part 82b. The generation of abnormal odor is suppressed by the sterilizing effect of heat. The indoor fan 30 is not allowed to operate during drying, and thus consumption of power is suppressed accordingly.

Although an example is indicated here in which the indoor fan 30 is stopped during drying of the indoor heat exchangers 10 and 60, the amount of air flow passing through the first heat-release part 82a and the second heat-release part 82b may be limited during drying of the indoor heat exchangers 10 and 60, without stoppage of the indoor fan 30, by controlling the rotation rate of the indoor fan 30, using a damper, and the like.

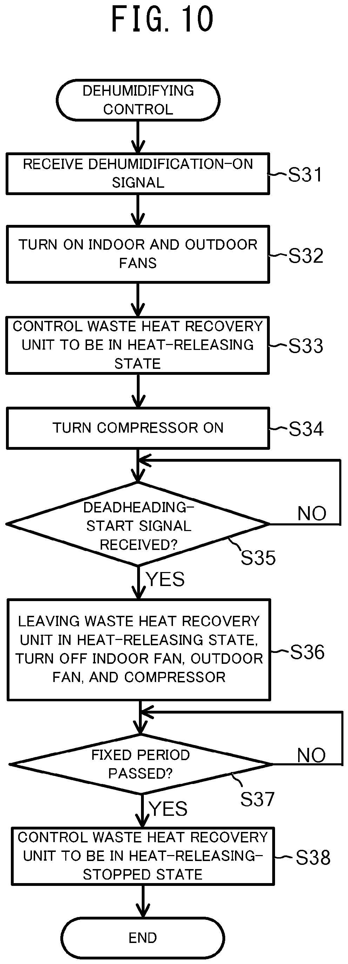

In the present embodiment, which do not form part of the invention, but is only shown for illustrative purposes, in addition to the aforementioned cooling-drying control and heating control, the processor 93 may further perform dehumidifying control to dehumidify the passenger compartment PRM. To facilitate understanding, such types of control are described below as independent of each other. The input unit 91 has a function for outputting to the processor 93 a dehumidification-ON signal for starting dehumidification in accordance with an operation of the user. The dehumidifying control accomplished by the control program 92a is described below with reference to FIG. 10.

As illustrated in FIG. 10, upon reception of the dehumidification-ON signal from the input unit 91 (step S31), the processor 93 causes operation of the indoor fan 30 and the outdoor fan 40 (step S32), and then controls the waste heat recovery unit 80 to be in the heat-releasing state (step S33), and also causes operation of the compressors 22 and 72 (step S34).

Thus in FIG. 9, the indoor air is firstly cooled by the indoor heat exchanger 10. The moisture included in the indoor air is removed by the moisture included in the indoor air condensing on the indoor heat exchanger 10. At this time, dew condensation occurs on the indoor heat exchanger 10 in a manner similar to that of cooling.

Next, the indoor air is heated appropriately by the first heat-release part 82a and is returned to the passenger compartment PRM. In this manner in contrast to the case of cooling, the lowering of humidity alone is enabled without extreme lowering of the temperature of the passenger compartment PRM. The indoor heat exchanger 60 and the second heat-release part 82b similarly are made to perform dehumidification.

The waste heat recovery unit 80 in FIG. 1 may be further equipped with a flow adjustment valve that can adjust the flow rate of brine flowing through the liquid line 83. By controlling a degree of opening of this flow adjustment valve, the processor 93 can adjust the amount of heat released by the first heat-release part 82a and the second heat-release part 82b.

Again with reference to FIG. 10, upon reception of the out-of-service starting signal from the input unit 91 (YES in step S35), the processor 93, while leaving the waste heat recovery unit 80 in the heat-releasing state, causes stoppage of operation of the indoor fan 30, the outdoor fan 40, and the compressors 22 and 72 (step S36).

By this means, the indoor heat exchanger 10 and the drain pan DP1 are heated and dried by the radiant heat of the first heat-release part 82a, and the indoor heat exchanger 60 and the drain pan DP2 are heated and dried by the radiant heat of the second heat-release part 82b. Further, if the aforementioned flow adjustment value is provided, the waste heat recovery unit 80 in step S36 preferably sets the flow adjustment valve to a maximum of the degree of opening.

When the drying of the indoor heat exchangers 10 and 60 and the drain pans DP1 and DP2 is continued for a fixed period predetermined as the period required for drying (YES in step S37), the processor 93 controls the waste heat recovery unit 80 in the heat-release-stopped state (step S38) and ends the dehumidifying control. In the aforementioned manner, the present embodiment also enables dehumidification of the passenger compartment PRM.

### Embodiment 5

In the aforementioned Embodiments 1 to 4, the indoor heat exchangers 10 and 60 are used as evaporators that exchange heat with air taken in from the passenger compartment PRM that is the air-conditioning target room that is the target of air conditioning. The outdoor heat exchangers 23 and 73 may be used as evaporators to exchange heat with air taken in from the exterior of the air-conditioning target room. A specific example is described below.

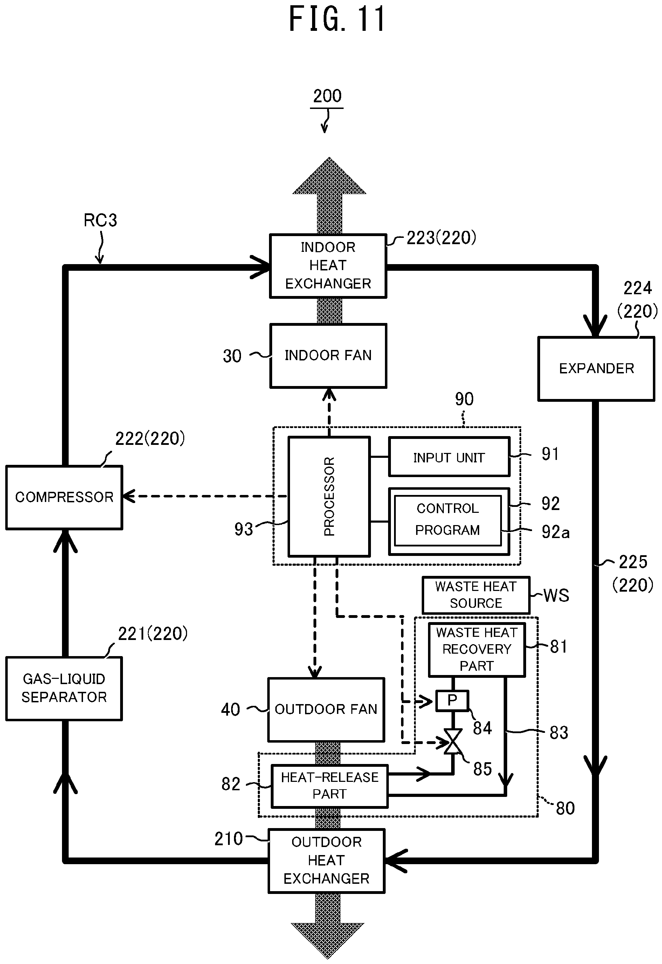

As illustrated in FIG. 11, the railway vehicle air-conditioning apparatus 200 according to the present embodiment includes an outdoor heat exchanger 210 serving as an evaporator for evaporating a refrigerant, and a cooperative device group 220 that forms, together with the outdoor heat exchanger 210, a refrigeration cycle RC3 using the refrigerant by exchange of the refrigerant with the outdoor heat exchanger 210.

The cooperative device group 220 includes: a gas-liquid separator 221 for separating liquid from the refrigerant having passed through the outdoor heat exchanger 210 and allowing passage only of evaporated refrigerant, a compressor 222 for compressing the refrigerant having passed through the gas-liquid separator 221, an indoor heat exchanger 223 functioning as a condenser that condenses compressed refrigerant, an expander 224 for allowing expansion of the condensed refrigerant and returning the expanded refrigerant to the outdoor heat exchanger 210, and a refrigerant line 225 that interconnects the aforementioned components 221 to 224 and guides the refrigerant.

The refrigeration cycle RC3 heats the passenger compartment PRM of the railway vehicle. That is, the indoor heat exchanger 223 causes condensation of the refrigerant by releasing heat to the indoor air. The outdoor heat exchanger 210 causes evaporation of the refrigerant by absorption of heat from the outdoor air.

In the present embodiment, the heat-release part 82 is disposed upstream of the outdoor heat exchanger 210 in the route of flow of the outdoor air created by the outdoor fan 40 serving as the evaporator fan.

During heating of the passenger compartment PRM, frost can be generated on the outdoor heat exchanger 210. This frost may block spaces between fins forming the outdoor heat exchanger 210 and cause a lowering of heat exchange efficiency. Thus in the present embodiment, defrosting is performed by the waste heat recovery unit 80 releasing waste heat to the outdoor heat exchanger 210. The input unit 91 has a function for outputting to the processor 93 a defrosting-ON signal to start the defrosting.

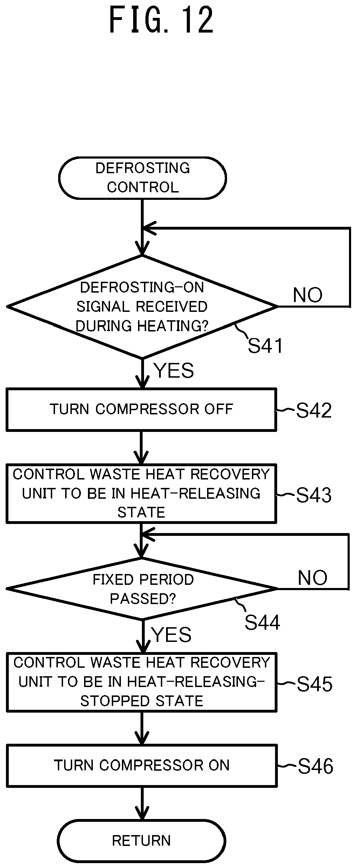

Defrosting control achieved by the control program 92a is described below with reference to FIG. 12. The processor 93 is taken to cause operation of the compressor 222, the indoor fan 30, and the outdoor fan 40, and heating of the passenger compartment PRM is assumed.

As illustrated in FIG. 12, upon reception of the defrosting-ON signal from the input unit 91 when heating of the passenger compartment PRM is in progress (YES in step S41), the processor 93 causes stoppage of operation of the compressor 222 (step S42). Exchange of refrigerant between the outdoor heat exchanger 210 and the cooperative device group 220 stop by this means. Further, the outdoor fan 40 operates as is at this time.

Next, the processor 93 controls the waste heat recovery unit 80 in the heat-releasing state (step S43). At this time, the heat-release part 82 releases waste heat, and outdoor air heated by the heat-release part 82 strikes the outdoor heat exchanger 21 due to the outdoor fan 40. Thus the frost attached to the outdoor heat exchanger 210 during heating is removed.

Upon continuation of the defrosting of the outdoor heat exchanger 210 in the aforementioned manner for a fixed period predetermined as the period required for the defrosting (YES in step S44), the processor 93 controls the waste heat recovery unit 80 to be in the heat-release-stopped state (step S45), causes restarting of operation of the compressor 222 (step S46), and returns to heating of the passenger compartment PRM.

According to the present embodiment as described above, frost attached to the outdoor heat exchanger 210 during heating can be removed. The consumption of power required for removal of the frost is suppressed by use of waste heat as the heat released to the outdoor heat exchanger 210.

Further, conventionally the circulation direction of the refrigerant in the refrigeration cycle RC3 is reversed, and the outdoor heat exchanger 210 is made to function as the condenser to perform defrosting. Thus air cooled by the indoor heat exchanger 223 functioning as the evaporator during defrosting is sent into the passenger compartment PRM, and a problem occurs in that the passenger compartment PRM becomes uncomfortable.

In contrast, the present embodiment performs defrosting without reversing the circulation direction of the refrigerant in the refrigeration cycle RC3, and the passenger compartment PRM is unlikely to become uncomfortable during defrosting.

Embodiments of the present disclosure are described above. The present disclosure is not limited to these embodiments, and the below-described modifications are possible.

In Embodiment 1, the user using the input unit 91 to provide to the processor 93 the signal to start passing through without stopping of the railway vehicle is used as an opportunity for performance of the drying of the indoor heat exchangers 10 and 60. The signal used as the opportunity for starting the drying of the indoor heat exchangers 10 and 60 is not limited to the signal generated when passing through without stopping is performed. A sensor that detects an absence of passengers in the passenger compartment PRM may be arranged, and a passengers-absent signal indicating that passengers are absent may be given to the processor 93. The processor 93 uses the passengers-absent signal as an opportunity to cause the performance of drying of the indoor heat exchangers 10 and 60.

In the aforementioned Embodiment 5, the opportunity for performing defrosting of the outdoor heat exchanger 210 is taken to be the user using the input unit 91 to provide to the processor 93 the defrosting-ON signal for the performance of defrosting. The signal taken to be the opportunity to start defrosting of the outdoor heat exchanger 210 is not necessarily imparted by the user. The processor 93 may cause the performance of defrosting of the outdoor heat exchanger 210 by using as the opportunity for such performance a frost-attachment detection signal detected by a sensor that detects attachment of frost to the outdoor heat exchanger 210, or a heat exchanger efficiency decline signal that is detected by a sensor that detects a lowering of heat exchange efficiency of the outdoor heat exchanger 210.

In the aforementioned Embodiments 1 to 5, although the waste heat recovery unit 80 is switched from the heat-releasing state to the heat-release-stopped state after continuation of the drying or defrosting of the evaporator for a predetermined fixed period, the determination of whether to switch the waste heat recovery unit 80 from the heat-releasing state to the heat-release-stopped state may be performed by the processor 93 by use of a measurement value of temperature of air having passed through the indoor heat exchanger 10 or 60, or temperature of a surface of the heat-release part 82 over which indoor air flows. Specifically, in the case in which the temperature of the air having passed through the indoor heat exchangers 10 and 60 or the temperature of the surface of the heat-release part 82 over which the indoor air flows is measured using the temperature sensor, the processor 93 may be configured to switch the waste heat recovery unit 80 from the heat-releasing state to the heat-release-stopped state when the measured temperature reaches a predetermined upper limit value.

The railway vehicle air-conditioning apparatuses 100 and 200 according the aforementioned Embodiments 1 to 5 can be used for air conditioning a vehicle compartment of the railway vehicle. In the present specification, the vehicle compartment indicates a space demarcated for riding by persons in the railway vehicle. Although the aforementioned Embodiments 1 to 5 cite examples in which the vehicle compartment used as the air-conditioning target room is the passenger compartment, the vehicle compartment to be air-conditioned can be an engineer's cab.

Although railway vehicle air-conditioning apparatuses 100 and 200 are described in the aforementioned Embodiments 1 to 5, the air-conditioning apparatus of the present disclosure is not limited to use for the railway vehicle. The air-conditioning apparatus of the present disclosure can be used for a vehicle such as an electric car. At least one of components of the electric car including an electric motor, a power supply circuit that supplies power to the electric motor, or a dynamic braking resistor to which is applied the electromotive force generated by the electric motor can be used as the waste heat source. Further, the air-conditioning apparatus of the present disclosure can be used for air conditioning of a living space in a home. In this case, a water heater can be used as a waste heat source. This last embodiment is not part of the present invention.

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

### Industrial Applicability

The air-conditioning apparatus of the present disclosure can be used widely for performing air conditioning of a room interior. The air-conditioning apparatus of the present disclosure is used with advantage in particular for air conditioning of the interior of a vehicle, and particularly a passenger compartment and engineer's cab of a railway vehicle.

### Reference Signs List

- 10: Indoor heat exchanger
- 20: Cooperative device group
- 21: Gas-liquid separator
- 22: Compressor
- 23: Outdoor heat exchanger
- 24: Expander
- 25: Refrigerant line
- 30: Indoor fan (evaporator fan)
- 40: Outdoor fan
- 50: Casing
- 51: Base frame
- 51a, 51b: Return port
- 52: Top plate
- 53: Partition plate
- 60: Indoor heat exchanger
- 70: Cooperative device group
- 71: Gas-liquid separator
- 72: Compressor
- 73: Outdoor heat exchanger
- 74: Expander
- 75: Refrigerant line
- 80: Waste heat recovery unit
- 81: Waste heat recovery part
- 81a: First waste heat recovery part
- 81b: Second waste heat recovery part
- 81c: Third waste heat recovery part
- 82: Heat-release part
- 82a: First heat-release part
- 82b: Second heat-release part
- 83: Liquid line
- 84: Pump
- 85: Solenoid valve
- 90: Controller
- 91: Input unit
- 92: Storage
- 92a: Control program
- 93: Processor
- 100, 200: Railway vehicle air-conditioning apparatus
- 210: Outdoor heat exchanger (evaporator)
- 220: Cooperative device group
- 221: Gas-liquid separator
- 222: Compressor
- 223: Indoor heat exchanger
- 224: Expander
- 225: Refrigerant line
- RC1: First refrigeration cycle
- RC2: Second refrigeration cycle
- RC3: Refrigeration cycle
- WS: Waste heat source
- EMD: Electric motor (waste heat source)
- INV: Inverter (waste heat source)
- DBR: Dynamic braking resistor (waste heat source)
- WHL: Wheel
- S1: Outdoor unit chamber
- S2: Indoor unit chamber
- DP1, DP2: Drain pan
- DT: Duct
- PRM: Passenger compartment (air-conditioning target room)

## Claims

1. A vehicle having an air-conditioning apparatus (100) disposed therein and a waste heat source (WS), the air-conditioning apparatus (100) comprising:
an evaporator (10) to evaporate a refrigerant;
a cooperative device group (20), the cooperative device group (20) and the evaporator constituting a refrigeration cycle using the refrigerant by exchange of the refrigerant between the cooperative device group (20) and the evaporator (10);
an evaporator fan (30) to create a flow of air striking the evaporator (10);
a waste heat recovery unit (80) disposed upstream of the evaporator (10) in a route of the flow of air, the waste heat recovery unit (80) comprising (i) a waste heat recovery part (81) to recover waste heat from the
waste heat source (WS) and (ii) a heat-release part (82) to release, to the evaporator (10), heat transmitted to the heat-release part, the waste heat recovery unit (80) being switchable between (a) a heat-releasing state in which the waste heat recovered by the waste heat recovery part (81) is transmitted to the heat-release part (82) and the heat-release part (82) releases the waste heat, and (b) a heat-release-stopped state in which the waste heat recovered by the waste heat recovery part (81) is less transmittable to the heat-release part (82) than when in the heat-releasing state; and
a controller (90) to control the waste heat recovery unit (80) to be in the heat-release-stopped state when the refrigerant is being exchanged between the evaporator (10) and the cooperative device group (20), and control the waste heat recovery unit (80) to be in the heat-releasing state in a state in which the evaporator fan (30) is creating the flow of air when the exchange of the refrigerant is stopped; and
**characterised in that**, the waste heat source (WS) is at least one of an electric motor (EMD) to propel the vehicle, a first power supply circuit (INV) to supply power to the electric motor (EMD), a second power supply circuit to supply power to an electric device mounted on the vehicle, or a dynamic braking resistor (DBR) to which is applied electromotive force generated by the electric motor (EMD).

2. The vehicle according to claim 1, wherein the controller (90) controls to switch a state from a state in which the controller (90) causes the exchange of the refrigerant between the evaporator (10) and the cooperative device group (20), controls the waste heat recovery unit (80) to be in the heat-release-stopped state and causes the evaporator fan (30) to create the flow of fan to a state in which the controller (90) stops the exchange of the refrigerant and controls the waste heat recovery unit (80) to be in the heat-releasing state, while the controller (90) causes the evaporator fan (30) to continue creating the flow of fan.

3. The vehicle according to claim 1 or 2, wherein
the air-conditioning apparatus (100) is disposed in a railway vehicle,
the evaporator (10) evaporates the refrigerant by heat exchange with air taken in from a passenger compartment (PRM) of the railway vehicle,
when the controller (90) receives from outside a signal indicating absence of a passenger in the passenger compartment (PRM), the controller (90) (i) stops the exchange of the refrigerant and (ii) controls the waste heat recovery unit (80) to be in the heat-releasing state, in a state in which the evaporator fan (30) is creating the flow of air.

4. The vehicle according to any one of claims 1 to 3,
wherein the evaporator (10) evaporates the refrigerant by heat exchange with air taken in from an air-conditioning target room (PRM) that is a target for air conditioning.

5. The vehicle according to any one of claims 1 to 4,
wherein the evaporator (10) evaporates the refrigerant by heat exchange with air taken in from outside an air-conditioning target room (PRM) that is a target for air conditioning.

## Patentansprüche

1. Fahrzeug mit einer darin angeordneten Klimatisierungsvorrichtung (100) und einer Abwärmequelle (WS), wobei die Klimatisierungsvorrichtung (100) umfasst:
Einen Verdampfer (10) zum Verdampfen von Kältemittel;
Eine kooperative Gerätegruppe (20), wobei die kooperative Gerätegruppe (20) und der Verdampfer (10) unter Verwendung des Kältemittels einen Kältemittelkreislauf ausbilden, indem die kooperative Gerätegruppe (20) und der Verdampfer (10) Kältemittel austauschen;
Ein Verdampferlüfter (30) zum Erzeugen einer auf den Verdampfer (10) auftreffenden Luftströmung;
Eine Abwärme-Rückgewinnungsanlage (80), die in Strömungsrichtung der Luft vor dem Verdampfer (10) angeordnet ist, wobei die Abwärme-Rückgewinnungsanlage (80) umfasst: (i) einen Abwärme-Rückgewinnungsteil (81) zur Rückgewinnung von Abwärme von der Abwärmequelle (WS) und (ii) einen Wärmeabgabeteil (82) zur Abgabe der dem Wärmeabgabeteil (82) zugeführten Wärme an den Verdampfer (10),
wobei die Abwärme-Rückgewinnungsanlage (80) geschaltet werden kann zwischen (a) einem Wärmeabgabe-Zustand, bei dem die durch den Abwärme-Rückgewinnungsteil (81) zurück gewonnene Abwärme dem Wärmeabgabeteil (82) zugeführt wird und der Wärmeabgabeteil (82) die Abwärme freisetzt, und (b) einem Zustand mit gestoppter Wärmeabgabe, bei dem die durch den Abwärme-Rückgewinnungsteil (81) zurück gewonnene Abwärme zum Wärmeabgabeteil (82) weniger übertragbar ist, als im Wärmeabgabe-Zustand; und
Eine Steuerung (90) um die Abwärme-Rückgewinnungsanlage (80) während das Kältemittel zwischen dem Verdampfer (10) und der kooperativen Gerätegruppe (20) ausgetauscht wird in den Zustand mit gestoppter Wärmeabgabe zu schalten, und um die Abwärme-Rückgewinnungsanlage (80) in den Wärmeabgabe-Zustand zu schalten, wenn ein Zustand vorliegt, bei dem der Verdampferlüfter (30) den Luftstrom erzeugt während der Austausch von Kältemittel gestoppt ist;
**dadurch gekennzeichnet, dass**
die Abwärmequelle (WS) von wenigstens einer der folgenden Einrichtungen ausgebildet wird: ein elektrischer Motor (EMD) zum Antreiben des Fahrzeugs, einem ersten Stromversorgungskreis (INV) zur Stromversorgung des elektrischen Motors (EMD), einem zweiten Stromversorgungskreis zur Stromversorgung eines am Fahrzeug angeordneten elektrischen Geräts, oder ein dynamischer Bremswiderstand (DBR) auf welchen eine vom elektrischen Motor (EMD) generierte elektromotorische Kraft wirkt.

2. Fahrzeug nach Anspruch 1, wobei
die Steuerung (90) einen Schaltvorgang zum Schalten zwischen einem ersten und einem zweiten Zustand steuert, bei dem im ersten Zustand die Steuerung (90) den Austausch des Kältemittels zwischen dem Verdampfer (10) und der kooperativen Gerätegruppe (20) verursacht, die Abwärme-Rückgewinnungsanlage (80) im Zustand mit gestoppter Wärmeabgabe betreibt und den Verdampferlüfter (30) dazu veranlasst die Luftströmung zu erzeugen und im zweiten Zustand die Steuerung (90) den Austausch des Kältemittels unterbricht und die Abwärme-Rückgewinnungsanlage (80) im Wärmeabgabe-Zustand betreibt während die Steuerung (90) den Verdampferlüfter (30) veranlasst die Luftströmung weiter zu erzeugen.

3. Fahrzeug nach Anspruch 1 oder 2, wobei
die Klimatisierungsvorrichtung (100) in einem Schienenfahrzeug angeordnet ist und der Verdampfer (10) das Kältemittel durch Wärmeaustausch mit Luft, die aus einem Fahrgastraum (PRM) des Schienenfahrzeugs angesaugt wird, verdampft, wobei die Steuerung (90) während sie von außen ein Signal empfängt, dass die Abwesenheit von Passagieren im Fahrgastraum (PRM) anzeigt: (i) den Austausch des Kältemittels unterbricht und (ii) die Abwärme-Rückgewinnungsanlage (80), in einem Zustand bei dem der Verdampferlüfter (30) den Luftstrom erzeugt, im Wärmeabgabe-Zustand betreibt.

4. Fahrzeug nach einem der Ansprüche 1 bis 3, wobei
der Verdampfer (10) das Kältemittel durch Wärmeaustausch mit Luft verdampft, die aus einem Klimaanlagen-Zielraum (PRM) angesaugt wird, der das Ziel für eine Klimatisierung darstellt.

5. Fahrzeug nach einem der Ansprüche 1 bis 4, wobei
der Verdampfer (10) das Kältemittel durch Wärmeaustausch mit Luft verdampft, die von außerhalb eines Klimaanlagen-Zielraum (PRM) angesaugt wird, der das Ziel für eine Klimatisierung darstellt.

## Revendications

1. Véhicule dans lequel sont disposés un appareil de climatisation (100) et une source de chaleur résiduelle (WS), l'appareil de climatisation (100) comprenant :
un évaporateur (10) pour évaporer un fluide frigorigène ;
un groupe de dispositifs coopératifs (20), le groupe de dispositifs coopératifs (20) et l'évaporateur constituant un cycle de réfrigération utilisant le fluide frigorigène par échange du fluide frigorigène entre le groupe de dispositifs coopératifs (20) et l'évaporateur (10) ;
un ventilateur d'évaporateur (30) pour créer un flux d'air frappant l'évaporateur (10) ;
une unité de récupération de chaleur résiduelle (80) disposée en amont de l'évaporateur (10) dans un trajet du flux d'air, l'unité de récupération de chaleur résiduelle (80) comprenant (i) une partie de récupération de chaleur résiduelle (81) pour récupérer de la chaleur résiduelle de la source de chaleur résiduelle (WS) et (ii) une partie de libération de chaleur (82) pour libérer, vers l'évaporateur (10), la chaleur transmise à la partie de libération de chaleur, l'unité de récupération de chaleur résiduelle (80) pouvant passer entre (a) un état de libération de chaleur où la chaleur résiduelle récupérée par la partie de récupération de chaleur résiduelle (81) est transmise à la partie de libération de chaleur (82) et la partie de libération de chaleur (82) libère la chaleur résiduelle, et (b) un état d'arrêt de libération de chaleur où la chaleur résiduelle récupérée par la partie de récupération de chaleur résiduelle (81) est moins transmissible à la partie de libération de chaleur (82) que dans l'état de libération de chaleur ; et
un dispositif de commande (90) pour commander l'unité de récupération de chaleur résiduelle (80) pour qu'elle soit dans l'état d'arrêt de libération de chaleur lorsque le fluide frigorigène est échangé entre l'évaporateur (10) et le groupe de dispositifs coopératifs (20), et commander l'unité de récupération de chaleur résiduelle (80) pour qu'elle soit dans l'état de libération de chaleur dans un état où le ventilateur d'évaporateur (30) crée le flux d'air lorsque l'échange du fluide frigorigène est arrêté ; et
**caractérisé en ce que**,
la source de chaleur résiduelle (WS) est au moins l'un parmi un moteur électrique (EMD) pour propulser le véhicule, un premier circuit d'alimentation électrique (INV) pour alimenter électriquement le moteur électrique (EMD), un deuxième circuit d'alimentation électrique pour alimenter électriquement un dispositif électrique monté sur le véhicule, ou un résistor de freinage dynamique (DBR) auquel est appliquée une force électromotrice générée par le moteur électrique (EMD).

2. Véhicule selon la revendication 1, dans lequel le dispositif de commande (90) commande pour passer un état d'un état où le dispositif de commande (90) provoque l'échange du fluide frigorigène entre l'évaporateur (10) et le groupe de dispositifs coopératifs (20), commande l'unité de récupération de chaleur résiduelle (80) pour qu'elle soit dans l'état d'arrêt de libération de chaleur et amène le ventilateur d'évaporateur (30) à créer le flux de ventilateur à un état où le dispositif de commande (90) arrête l'échange du fluide frigorigène et commande l'unité de récupération de chaleur résiduelle (80) pour qu'elle soit dans l'état de libération de chaleur, tandis que le dispositif de commande (90) amène le ventilateur d'évaporateur (30) à continuer de créer le flux de ventilateur.

3. Véhicule selon la revendication 1 ou 2, dans lequel
l'appareil de climatisation (100) est disposé dans un véhicule ferroviaire,
l'évaporateur (10) évapore le fluide frigorigène par échange de chaleur avec de l'air prélevé depuis un compartiment passager (PRM) du véhicule ferroviaire,
lorsque le dispositif de commande (90) reçoit de l'extérieur un signal indiquant l'absence d'un passager dans le compartiment passager (PRM), le dispositif de commande (90) (i) arrête l'échange du fluide frigorigène et (ii) commande l'unité de récupération de chaleur résiduelle (80) pour qu'elle soit dans l'état de libération de chaleur, dans un état où le ventilateur d'évaporateur (30) crée le flux d'air.

4. Véhicule selon l'une quelconque des revendications 1 à 3,
dans lequel l'évaporateur (10) évapore le fluide frigorigène par échange de chaleur avec de l'air prélevé dans une pièce cible de climatisation (PRM) qui est une cible de climatisation.

5. Véhicule selon l'une quelconque des revendications 1 à 4,
dans lequel l'évaporateur (10) évapore le fluide frigorigène par échange de chaleur avec de l'air prélevé depuis l'extérieur d'une pièce cible de climatisation (PRM) qui est une cible de climatisation.
